(19) Europäisches Patentamt
European Patent Office
Office européen des brevets

(11) EP 0 499 230 B1

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.[6]: **C08G 69/32**

(21) Anmeldenummer: **92102331.3**

(22) Anmeldetag: **12.02.1992**

(54) **Aromatische Copolyamide, Verfahren zu ihrer Herstellung und daraus geformte Gebilde**

Aromatic copolyamides, process for their preparation and shaped articles prepared from the same

Copolyamides aromatiques, procédé pour leur préparation et articles moulés à partir de ceux-ci

(84) Benannte Vertragsstaaten:
**AT CH DE ES FR GB IT LI NL PT**

(30) Priorität: **14.02.1991 DE 4104394**

(43) Veröffentlichungstag der Anmeldung:
**19.08.1992 Patentblatt 1992/34**

(73) Patentinhaber: **HOECHST AKTIENGESELLSCHAFT**
**65926 Frankfurt am Main (DE)**

(72) Erfinder:
- **Miess, Georg-Emerich, Dr.**
  **W-8400 Regensburg (DE)**
- **Klein, Peter, Dr.**
  **W-6200 Wiesbaden (DE)**
- **Heinrich, Karl**
  **W-8934 Grossaitingen (DE)**

(56) Entgegenhaltungen:
**EP-A- 0 199 090**
**EP-A- 0 307 993**
**EP-A- 0 364 892**
**DE-A- 3 007 063**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 499 230 B1

Printed by Jouve, 75001 PARIS (FR)

**Beschreibung**

Die Erfindung betrifft neue, aromatische Copolyamide des Dicarbonsäure-Diamin-Typs, die aus ihren Lösungen in organischen Lösemitteln versponnen werden können sowie daraus hergestellte geformte Gebilde, wie Fäden, Fasern, Faserpulp, Filme, Folien und Membranen mit sehr hohem Anfangsmodul (Elastizitätsmodul), sowie Verfahren zu ihrer Herstellung.

Aromatische Polyamide (Polyaramide) sind bekanntlich Rohstoffe von hoher thermischer und chemischer Stabilität sowie geringer Brennbarkeit. So zeigen beispielsweise Fasern und Folien aus solchen Rohstoffen sehr gute mechanische Eigenschaften, wie hohe Festigkeit und hohen Anfangsmodul (Elastizitätsmodul) und sind für technische Einsatzgebiete gut geeignet - beispielsweise zur Verstärkung von Kunststoffen oder als Filtermaterialien.

Es ist bekannt, daß Fäden oder Fasern aus Polyaramiden mit hoher Festigkeit und hohem Anfangsmodul hergestellt werden können, wenn die Amidbindungen an den aromatischen Kernen koaxial oder nahezu parallel zueinander orientiert sind, wodurch starre, stäbchenförmige Polymermoleküle entstehen.

Ein typisches Polyamid dieser Art ist beispielsweise Poly-(p-phenylenterephthalamid). Fäden aus diesem Material sind beispielsweise in der Deutschen Patentschrift 22 19 703 beschrieben.

Dieses Polyamid weist eine Reihe von Vorzügen auf, seine Herstellung und seine Verarbeitung sind jedoch sehr schwierig. Wegen der schlechten Löslichkeit in polaren organischen Lösungsmitteln - und zwar auch in Gegenwart von anorganischen Salzen, wie Calciumchlorid oder Lithiumchlorid, als Lösungsvermittler - fällt dieses Polymer kurz nach seiner Bildung bereits aus dem Reaktionsmedium aus. Es muß isoliert, gewaschen, getrocknet und dann erneut in einem Spinnlösungsmittel gelöst werden. Bevorzugtes Lösungsmittel zur Herstellung der Spinnlösungen ist konzentrierte Schwefelsäure, was besondere Probleme bei der Handhabung (Arbeitssicherheit, Korrosion) und Abfallbeseitigung verursacht.

Es wurde daher versucht, diese Schwierigkeiten dadurch zu umgehen, daß Copolyamide entwickelt wurden, welche eine gute Löslichkeit in den bekannten Amid-Lösungsmitteln haben, die sich auch gut verspinnen lassen und deren Filamente sich nach Verstreckung durch hohe Festigkeitswerte und Anfangsmoduli auszeichnen.

So wurden beispielsweise in der Deutschen Patentschrift 25 56 883 und in der Deutschen Offenlegungsschrift 30 07 063 Copolyamide aus Terephthalsäure, p-Phenylendiamin und 3,4'-Diaminodiphenylether beschrieben, die in Amid-Lösungsmitteln isotrope Lösungen liefern, die sich gut verspinnen lassen. Die Filamente erlangen durch eine sehr hohe Verstreckung hohe Festigkeiten und Moduli. Die erhöhte Löslichkeit wird hier durch die meta-Orientierung und das Sauerstoffatom verursacht. Es hat sich allerdings gezeigt, daß die Weiterverarbeitung von Filamenten aus solchen Copolyamiden noch nicht zufriedenstellend ist, da die dynamische Tüchtigkeit solcher Filamente noch zu wünschen übrig läßt.

Der vorliegenden Erfindung liegt die Aufgabe zugrunde, weitere aromatische Copolyamide zu finden, die sich durch eine gute Löslichkeit in Polyamidlösungsmitteln und durch eine gute Verspinnbarkeit auszeichnen und aus denen Fäden mit guten mechanischen Eigenschaften hergestellt werden können, die sich durch eine hervorragende dynamische Tüchtigkeit und/oder durch eine gute Biegescheuerbeständigkeit und/oder Knotenfestigkeit und/oder Schlingenfestigkeit auszeichnen.

Die erfindungsgemäßen Copolyamide sind gekennzeichnet durch die Anwesenheit ausgewählter aromatischer Diaminkomponenten in ausgewählten Mengenanteilen.

Die Erfindung betrifft aromatische Copolyamide, die in organischen Polyamid-Lösungsmitteln löslich sind und die im wesentlichen aus mindestens 95 Mol-% an wiederkehrenden Struktureinheiten der Formeln Ia, Ib und Ic oder Ia, Ib und Ie und gegebenenfalls aus bis zu 5 Mol-% an wiederkehrenden Struktureinheiten der Formel Id bestehen

$$[\text{-OC-R}^1\text{-CO-NH-R}^2\text{-NH-}] \qquad \text{(Ia)},$$

$$[\text{-OC-R}^1\text{-CO-NH-R}^3\text{-NH-}] \qquad \text{(Ib)},$$

$$[\text{-OC-R}^1\text{-CO-NH-R}^4\text{-NH-}] \qquad \text{(Ic)},$$

$$[\text{-OC-R}^1\text{-CO-NH-R}^5\text{-NH-}] \qquad \text{(Id)},$$

$$[\text{-OC-R}^1\text{-CO-NH-R}^7\text{-NH-}] \qquad \text{(Ie)},$$

wobei die Molanteile der Reste $R^2$, $R^3$ und $R^4$ in den Copolyamiden mit den Struktureinheiten der Formeln Ia, Ib und Ic, bezogen auf die Summe dieser Reste im Copolyamid, innerhalb folgender Grenzen liegen:

Rest $R^2$: 5 bis 70 Mol-%, vorzugsweise 15 bis 50 Mol-%,
insbesondere 20 bis 30 Mol-%,

Rest $R^3$: 5 bis 70 Mol-%, vorzugsweise 15 bis 60 Mol-%, insbesondere 20 bis 30 Mol-%, und

Rest $R^4$: 5 bis 70 Mol-%, vorzugsweise 15 bis 60 Mol-%, insbesondere 40 bis 60 Mol-%;

wobei die Molanteile der Reste $R^2$, $R^3$ und $R^7$ in den Copolyamiden mit den Struktureinheiten der Formeln Ia, Ib und Ie, bezogen auf die Summe dieser Reste im Copolyamid, innerhalb folgender Grenzen liegen:

Rest $R^2$: 5 bis 70 Mol-%, vorzugsweise 15 bis 60 Mol-%, insbesondere 20 bis 30 Mol-%,

Rest $R^3$: 15 bis 70 Mol-%, vorzugsweise 20 bis 60 Mol-%, insbesondere 20 bis 30 Mol-%, und

Rest $R^7$: 5 bis 70 Mol-%, vorzugsweise 15 bis 60 Mol-%, insbesondere 40 bis 60 Mol-%.

In den obigen Formeln Ia bis Ie bedeutet $R^1$ zu mindestens 95 Mol-%, bezogen auf alle Reste $R^1$ im Copolyamid einen Rest der Formel IIa und bis zu 5 Mol-% alle Reste $R^1$ können eine Struktur der Formel IIb aufweisen

$$-Ar^1- \quad \text{(IIa)},$$

$$-Ar^2- \quad \text{(IIb)},$$

worin $Ar^1$ ein zweiwertiger aromatischer Rest ist, dessen Valenzbindungen sich in para- oder in vergleichbarer koaxialer oder paralleler Stellung, zueinander befinden, und der gegebenenfalls mit ein oder zwei inerten Resten substituiert ist, und $Ar^2$ ein zweiwertiger aromatischer Rest ist, dessen Valenzbindungen sich in meta- oder in vergleichbarer gewinkelter Position zueinander befinden, und der gegebenenfalls mit ein oder zwei inerten Resten substituiert ist.

In den obigen Formeln Ia bis Ie bedeuten $R^2$ einen Rest der Formel III

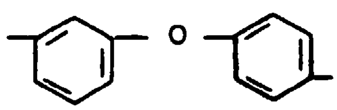

(III),

$R^3$ einen Rest der Formel IV

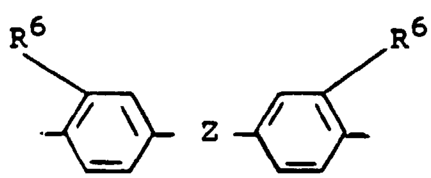

(IV),

worin die Reste $R^6$ unabhängig voneinander Wasserstoff oder inerte Reste bedeuten und Z ausgewählt wird aus der Gruppe bestehend aus -O-, -S-, -CO-, $-SO_2-$, $-C_nH_{2n}-$ und $-O-Ar^1-O-$, wobei n eine ganze Zahl von 1 bis 10 ist und $Ar^1$ die oben definierte Bedeutung besitzt,

$R^4$ einen von $R^3$ unterschiedlichen Rest, der aus einer der für $R^3$ definierten Strukturen ausgewählt ist,

$R^5$ einen Rest, der aus einer der für $Ar^2$ definierten Strukturen ausgewählt wird, und

$R^7$ einen unsubstituierten zweiwertigen aromatischen Rest, dessen Valenzbindungen sich in para- oder in vergleichbarer koaxialer oder paralleler Stellung zueinander befinden.

Bedeuten irgendwelche Substituenten in den Resten $Ar^1$, $Ar^2$, $R^3$, $R^4$ oder $R^5$ inerte Reste, so kann es sich dabei um einwertige anorganische Reste, wie Halogen, oder um einwertige, organische Reste, wie Alkyl, Alkoxy, Bis-(N-Alkyl)-amino, Bis-(N-alkyl)-amido oder Nitril handeln. Der Begriff "inerter Rest" bedeutet, daß diese Substituenten unter den Herstellungs- und Verarbeitungsbedingungen der erfindungsgemäßen Copolyamide nicht reagieren.

Bevorzugte inerte Reste sind Chlor oder $C_1$-$C_6$-Alkyl oder $C_1$-$C_6$)-Alkoxy, insbesondere geradkettiges $C_1$-$C_6$-Alkyl oder Alkoxy. Beispiele dafür sind Methyl, Ethyl, n-Propyl, Isopropyl, n-Butyl, n-Pentyl und n-Hexyl oder Methoxy, Ethoxy, n-Propyloxy, Isopropyloxy, n-Butyloxy, n-Pentyloxy oder n-Hexyloxy.

Besonders bevorzugte inerte Reste sind Chlor, Methoxy oder Methyl.

Bedeuten irgendwelche Reste zweiwertige aromatische Reste, deren Valenzbindungen sich in para- oder in vergleichbarer koaxialer oder paralleler Stellung zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert oder über C-C-Bindungen oder über eine -CO-NH-Gruppe linear miteinander verbunden sein.

Die Valenzbindungen, die in koaxialer oder paralleler zueinander befindlicher Stellung stehen, sind entgegengesetzt gerichtet. Ein Beispiel für koaxiale, entgegengesetzt gerichtete Bindungen sind die Diphenyl-4,4'-Bindungen. Ein Beispiel für parallele, entgegengesetzt gerichtete Bindungen sind z.B. die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Stellung zueinander befinden, sind einkernige aromatische Reste mit zueinander paraständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C-Bindung oder über eine -CO-NH-Gruppe verknüpfte aromatische Reste mit koaxialen, entgegengesetzt gerichteten Bindungen insbesondere 4,4'Biphenylen oder ein Rest des 4,4'-Diaminobenzanilids. Besonders bevorzugte Reste $R^7$ sind 1,4-Phenylen und der Rest des 4,4'-Diaminobenzanilids.

$Ar^1$ ist vorzugsweise 1,4-Phenylen.

Bedeuten irgendwelche Reste zweiwertioe aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere in oder zwei Sauerstoff-, Stickstoff- oder Schwefelatome im aromatischen Kern auf.

Mehrkernige aromatische Reste können miteinander kondensiert sein oder über C-C-Bindungen oder über Brükkengruppen, wie z.B. -O-, $-CH_2-$, -CO-NH-, -S-, -CO- oder $-SO_2-$ miteinander verknüpft sein.

Beispiele für mehrkernige aromatische Reste, deren Valenzbindungen sich in zur meta-Position vergleichbaren gewinkelten Position befinden, sind 1,6-Naphthylen, 2,7-Naphthylen oder 3,4'-Biphenylen.

Ein bevorzugtes Beispiel für einen einkernigen aromatischen Rest dieses Typs ist 1,3-Phenylen.

Bevorzugte Reste $R^3$ und $R^4$ der Formel IV sind solche, worin Z ausgewählt wird aus der Gruppe bestehend aus -O-, $-CH_2-$ und

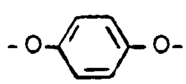

und worin $R^6$ Wasserstoff, Chlor,
geradkettiges $C_1$-$C_6$-Alkyl, insbesondere Methyl, oder geradkettiges $C_1$-$C_6$-Alkoxy, insbesondere Methoxy, bedeutet.

Ganz besonders bevorzugt ist Z ein Rest

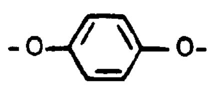

oder $-CH_2-$ und $R^6$ ist Wasserstoff.

Die erfindungsgemäßen Polyamide können unsubstituierte Reste und substituierte Reste nebeneinander in wechselnden Anteilen enthalten.

Dabei kann das Polyamid eine Art oder mehrere Arten substituierter Reste $Ar^1$, $Ar^2$, $R^3$, $R^4$ und $R^5$ enthalten; z. B. kann es ausschließlich methylsubstituierte Reste oder es kann Anteile von Resten mit verschiedenen Alkylsubstituenten und/oder mit Halogensubstituenten enthalten.

Die erfindungsgemäßen Polyamide können aber auch ausschließlich unsubstituierte oder substituierte Reste $Ar^1$, $Ar^2$, $R^3$, $R^4$ und $R^5$ enthalten. Bevorzugt werden solche erfindungsgemäßen Polyamide, die nur unsubstituierte oder die bis zu ca. 30 Mol-% substituierte Reste, bezogen auf das Polymere, enthalten.

Weitere bevorzugte aromatische Copolyamide der vorliegenden Erfindung lassen sich zu Fasern oder Fäden verarbeiten, die eine Reißdehnung von mehr als 3,5 % aufweisen. Auch diese Fasern bzw. Fäden zeichnen sich durch eine ausgezeichnete dynamische Tüchtigkeit aus.

Zu den bevorzugten Copolyamiden dieses Typs zählen Verbindungen enthaltend die wiederkehrenden Strukturelemente der Formeln Ia, Ib und Ie, worin $R^7$ 1,4-Phenylen ist und $R^3$ ein Rest des 1,4-Bis-(4aminophenoxy)-benzols oder des 4,4'-Diaminodiphenylmethans ist und worin die Molanteile der Reste $R^2$, $R^3$ und $R^7$ innerhalb folgender Gren-

zen liegen:

Rest $R^2$: 10 bis 50 Mol-%,insbesondere 20 bis 30 Mol-%,
Rest $R^3$: 20 bis 50 Mol-%,insbesondere 20 bis 30 Mol-%, und
Rest $R^7$: 20 bis 55 Mol-%,insbesondere 35 bis 55 Mol-%.

Ganz besonders bevorzugte Copolyamide der vorliegenden Erfindung enthalten die wiederkehrenden Struktureinheiten der Formeln Ia, Ib und Ie, worin $R^3$ ein Rest des 4,4'-Diaminodiphenylmethans ist. Fäden und Fasern aus diesen Copolyamiden zeichnen sich durch eine besonders gute Biegescheuerbeständigkeit aus und lassen sich problemlos verarbeiten.

Zur Herstellung der Copolyamide enthaltend die wiederkehrenden Struktureinheiten Ia, Ib und Ic und gegebenenfalls Id setzt man zweckmäßigerweise ein Dicarbonsäuredichlorid der Formel V mit einem Gemisch der Diamine der Formeln VI, VII und VIII und gegebenenfalls IX um

$$ClOC\text{-}R^1\text{-}COCl \qquad (V)$$

$$H_2N\text{-}R^2\text{-}NH_2 \qquad (VI),$$

$$H_2N\text{-}R^3\text{-}NH_2 \qquad (VII),$$

$$H_2N\text{-}R^4\text{-}NH_2 \qquad (VIII),$$

$$H_2N\text{-}R^5\text{-}NH_2 \qquad (IX),$$

worin $R^1$ bis $R^5$ die weiter oben definierte Bedeutung besitzen.

Zur Herstellung der Copolyamide enthaltend die wiederkehrenden Struktureinheiten Ia, Ib und Ie und gegebenenfalls Id setzt man ein Dicarbonsäuredichlorid der Formel V, wie oben definiert, mit einem Gemisch der Diamine der Formeln VI, VII, wie oben definiert, und X, und gegebenenfalls IX, wie oben definiert, um

$$H_2N\text{-}R^7\text{-}NH_2 \qquad (X),$$

worin $R^7$ die oben definierte Bedeutung besitzt.

Das Dicarbonsäuredichlorid der Formel V und die einzelnen Diamintypen können auch in Form von Mischungen eingesetzt werden.

Die Mengenverhältnisse der Diamine VI, VII und VIII, bzw. VI, VII und X und gegebenenfalls IX sind dabei jeweils so zu wählen, daß Polyamide mit den oben definierten Mengenanteilen aus Resten $R^2$, $R^3$ und $R^4$ bzw. $R^2$, $R^3$ und $R^7$ entstehen.

Es ist für den Fachmann selbstverständlich, daß die Summe aller von aromatischen Säuren abgeleiteten Struktureinheiter und die Summe aller von aromatischen Aminen abgeleiteten Struktureinheiten im wesentlichen gleich sind, d.h., daß sie sich maximal um ca. 1 %, vorzugsweise maximal um 0,2 %, unterscheiden, insbesondere im Rahmen der praktischen Meß- und Dosierungsmöglichkeiten gleich sind.

Das Molekulargewicht der entstehenden Polyamide läßt sich unter anderem über die Auswahl der Mengenverhältnisse von aromatischen Säuren zu aromatischen Aminen steuern. Diese Auswahlkriterien sind dem Fachmann auf dem Gebiet der Polykondensation bekannt.

Beispiele für geeignete aromatische Dicarbonsäuren, von denen sich die Dicarbonsäuredichloride der Formel V ableiten, sind Naphthalin-1,4-dicarbonsäure, Naphthalin-1,5-dicarbonsäure, Naphthalin-2,6-dicarbonsäure, Biphenyl-4,4'-dicarbonsäure, 2-Chlorterephthalsäure, 2-Bromterephthalsäure, 2-Methylterephthalsäure und insbesondere Terephthalsäure.

Bis zu 5 Mol-% der Dicarbonsäuredichloride können sich auch von Resten $Ar^2$ ableiten. Beispiele für Säuren, von denen sich solche Dicarbonsäuredichloride ableiten, sind Naphthalin-1,6-dicarbonsäure, Naphthalin-1,7-dicarbonsäure, Naphthalin-2,7-dicarbonsäure, Biphenyl-3,4'-dicarbonsäure und insbesondere Isophthalsäure.

Beispiele für geeignete Diamine der Formel X sind Naphthalin-1,4-diamin, Naphthalin-1,5-diamin, Naphthalin-2,6-diamin, Benzidin und insbesondere 4,4'-Diaminobenzanilid und p-Phenylendiamin.

Beispiele für geeignete Diamine der Formel IX sind Naphthalin-1,6-diamin, Naphthalin-1,7-diamin, Naphthalin-2,7-diamin, Biphenyl-3,4'-diamin, 3,4'-Diaminobenzanilid und m-Phenylendiamin.

Beispiele für geeignete Diamine der Formel VII und VIII sind 4,4'-Diaminodiphenylether, 4,4'-Diaminodiphenylsulfid, 4,4'-Diaminodiphenylketon, 4,4'-Diaminodiphenylsulfon, 4,4'-Diaminodiphenyl-2,2-propyliden und insbesondere 1,4-Bis-(4'-aminophenoxy)-benzol und 4,4'-Diaminodiphenylmethan, sowie die entsprechenden 3,3'-dichlor-, 3,3'-dimethyl- oder 3,3'-dimethoxy-substituierten Derivate dieser Diamine.

Die Copolymerisation der oben beschriebenen monomeren Verbindungen wird im allgemeinen als Lösungspolymerisation ausgeführt.

Dazu werden die miteinander umzusetzenden aromatischen monomeren Verbindungen in der Regel in einem organischen Lösungsmittel gelöst. Das organische Lösungsmittel enthält dabei vorzugsweise zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen von Bedeutung.

Bei einer bevorzugten Form der Durchführung der Lösungspolymerisation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Copolymerisation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Copolymerisationsmischung vor, während oder nach der Copolymerisation zugesetzt wird.

Beispiele für solche Zusatzstoffe sind Alkalimetallhalogenide, wie Lithiumchlorid oder Erdalkalimetallhalogenide, wie Kalziumchlorid.

Die Polykondensationstemperaturen liegen bei der Lösungspolymerisation üblicherweise zwischen -20°C und +120°C, bevorzugt zwischen +10°C und +100°C. Besonders gute Ergebnisse werden bei Reaktionstemperaturen zwischen +10°C und +80°C erzielt.

Die Summe der Konzentrationen der aromatischen monomeren Verbindungen in der Polymerisationsgemischlösung kann unter Beachtung des gewünschten Polymerisationsgrades, der gewünschten Viskosität des Polymerisationsgemisches, der Art der verwendeten aromatischen monomeren Verbindungen, der Art des verwendeten Lösungsmittels und der gewünschten Polymerisationstemperatur eingestellt werden. Die günstigste Summe der Konzentrationen kann dabei aufgrund einer Reihe von Vorversuchen für den Ablauf der Polymerisation ermittelt werden.

Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen. Besonders gute Ergebnisse werden bei Konzentrationen von 5,0 bis 7,5 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von ca. 2,5 bis 7,0 dl/g entspricht.

Unter inhärenter Viskosität wird der Ausdruck

$$\eta inh = \frac{1n_{\eta rel}}{c}$$

verstanden. $\eta_{rel}$ bedeutet dabei die relative Viskosität, c die angewandte Konzentration in g/100 ml.

Sie wird für die Zwecke der vorliegenden Erfindung bestimmt an Lösungen von jeweils 0,5 g Polymer in 100 ml 98 gew.-%iger Schwefelsäure bei 25°C.

Das skizzierte, an sich bekannte Verfahren zur Herstellung von aromatischen Polyamiden ist, soweit es zur Herstellung der oben beschriebenen erfindungsgemäßen aromatischen Polyamide dient, ebenfalls Gegenstand der Erfindung.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und locker an das Amidlösungsmittel gebundene Chlorwasserstoff durch Zugabe basischer Substanzen neutralisiert werden. Geeignet sind dafür beispielsweise Lithiumhydroxyd, Calciumhydroxyd, insbesondere aber Calciumoxid.

Das bei Durchführung des erfindungsgemäßen Verfahrens erhaltene aromatische Copolyamid kann aus dem Copolymerisationsgemisch durch ein Trennverfahren abgeschieden werden, beispielsweise durch Präzipitation. Zur Herstellung einer Lösung für das Ausformen des Copolyamids wird das so gewonnene aromatische Copolyamid dann in einem geeigneten organischen Lösungsmittel gelöst, wobei dieses Verfahren als Auflösungsverfahren zur Herstellung der Ausformlösung bezeichnet wird.

In den Fällen, in denen zur Herstellung des aromatischen Copolyamids gemäß der Erfindung das Verfahren der

Lösungspolymerisation angewandt wird, wird das Copolyamid, weil es in dem Lösungsmittel für die Polymerisation hervorragend löslich ist, in diesem jedoch vollständig gelöst. Daher ist es bei industriellem Einsatz des erfindungsgemäßen Verfahrens vorteilhaft, daß bei der Polymerisation erhaltene Gemisch sofort als Ausformlösung für das aromatische Copolyamid zu verwenden.

Das aromatische Copolyamid gemäß der Erfindung ist in einem organischen Lösungsmittel, beispielsweise in organischen Lösungsmitteln vom Amidtyp hervorragend löslich und besitzt eine hervorragende Wärmebeständigkeit und eine überlegene chemische Widerstandsfähigkeit. Das erfindungsgemäße aromatische Copolyamid ist besonders nützlich für die Herstellung von verschiedenen geformten Artikeln, beispielsweise Fäden, Fasern, Filamenten, Filmen und Folien, die ebenfalls ein Gegenstand der Erfindung sind. Diese Gebilde besitzen nicht nur eine hervorragende Wärmebeständigkeit und chemische Beständigkeit, sondern weisen auch überlegene mechanische Eigenschaften auf, beispielsweise hinsichtlich der Zugfestigkeit, der Abriebfestigkeit und des Elastizitätsmoduls. Die Lösung des aromatischen Copolyamids kann ebenfalls auf unterschiedliche Weise verwendet werden, beispielsweise zur Produktion von Fasern, Folien, blattförmigen Elementen, Faserstoffen und anderen geformten Artikeln.

Bei dem Verfahren zum Herstellen der Ausformlösung des aromatischen Copolyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Für die Herstellung der Ausformlösung ist es vorteilhaft, wenn die Konzentration des aromatischen Copolyamids in einem Bereich zwischen 4 und 15 Gew.-%, insbesondere zwischen 5 und 10 Gew.-% gehalten wird. Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Kalziumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur.

Das Ausformen der Ausformlösung zu einem geformten Artikel kann nach jedem geeigneten Trockenverfahren, Naßverfahren oder Trocken-Naßverfahren erfolgen. In den Fällen, in denen ein Naßverfahren angewandt wird, um die Ausformlösung beispielsweise zu Filamenten auszuformen, wird die Ausformlösung oder - in diesem Fall - die Spinnlösung durch eine Düse, beispielsweise eine Spinndüse, in eine koagulierende Flüssigkeit extrudiert. Dabei ist es gewöhnlich vorteilhaft, wenn die Koagulationsflüssigkeit aus Wasser oder aus einer wäßrigen, ein polares organisches Lösungsmittel enthaltenden Lösung besteht. Dabei kann das polare organische Lösungsmittel unter denselben Amid-Lösungsmitteln ausgewählt werden, die gewöhnlich für das Lösen des aromatischen Copolyamids verwendet werden. Als polares organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt. Das polare organische Lösungsmittel liegt in der Koagulationsflüssigkeit vorzugsweise in einer Konzentration zwischen 70 Gew.-% und weniger vor, insbesondere zwischen 50 Gew.-% und weniger.

Das vorstehend erläuterte Ausformverfahren ist besonders für die Herstellung von Folien oder Filamenten aus einer Ausformlösung geeignet.

Bei der Herstellung von Filamenten aus dem aromatischen Copolyamid wird die Ausform- bzw. Spinnlösung durch einen Spinnkopf mit mehreren Spinnöffnungen extrudiert, wobei die filamentförmigen Ströme der Spinnlösung in einer der oben angegebenen Koagulationsflüssigkeiten verfestigt werden (Naßverfahren) oder in einer die Verdampfung fördernden Atmosphäre (Trockenverfahren). Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt. Eine ebenfalls geeignete Variante ist das sogenannte "Trockendüsen-Naßspinnverfahren", wie es z.B. in der US-A-34 14 645 beschrieben ist.

Beim Naßspinnen eines aromatischen Copolyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filamente des aromatischen Copolyamids in ein Wasserbad eingeleitet werden, welches auf einer Temperatur zwischen 0 und 100°C gehalten wird. Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filamenten ausgewaschen.

Aus der vorstehenden Beschreibung wird deutlich, daß das erfindungsgemäße aromatische Copolyamid unter Verwendung üblicher Spinnverfahren und -vorrichtungen ohne weiteres zu Filamenten verarbeitet werden kann, ohne daß ein gefährliches oder schädliches Lösungsmittel, wie z.B. konzentrierte Schwefelsäure, verwendet werden müßte. Hierdurch werden die Gefahren für das Bedienungspersonal verringert. Außerdem haben die aus dem erfindungsgemäßen Copolyamid hergestellten Filamente eine dichte interne Struktur.

Die Ausformlösung kann auch unter Verwendung üblicher Auffächerungs- oder Extrudierverfahren zu einem Film bzw. einer Folie verarbeitet werden.

Filamente oder Folien, die nach den vorstehend angegebenen Ausformverfahren hergestellt werden, werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Filamente oder Folien.

Filamente aus den erfindungsgemäßen aromatischen Copolyamiden werden in der Regel verstreckt, um eine hohe mechanische Festigkeit und einen hohen Elastizitätsmodul zu erzielen. Das Verstreckungsverhältnis beträgt dabei üblicherweise etwa 1:3 bis 1:15. Die Verstrecktemperatur liegt dabei in der Regel zwischen 250 und 500°C, vorzugsweise zwischen 300 und 450°C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente oder Folien einer weiteren Wärmebehandlung bei gleicher oder höherer Temperatur unterworfen werden, um ihre kristalline Struktur zu fördern. In diesem Zusammenhang sei darauf hingewiesen, daß das aromatische Copolyamid gemäß der Erfindung nicht nur hinsichtlich seiner Lösbarkeit in üblichen organischen Lösungsmitteln überraschend vorteilhaft ist, sondern nach der Herstellung der Filamente oder Folien ohne weiteres unter "milden" Arbeitsbedingungen verstreckt werden kann.

Die Filamente, Fasern oder Fasermaterialien aus einem aromatischen Copolyamid gemäß der Erfindung, welche hervorragende mechanische und thermische Eigenschaften besitzen und eine hohe dynamische Tüchtigkeit aufweisen, können auf die verschiedenste Weise industriell eingesetzt werden, beispielsweise als Verstärkungsmaterialien für die Gewebeeinlagen von Autoreifen und anderen Gummiartikeln, als wärmebeständige Isolationsmaterialien, zur Herstellung von Filtergeweben und als leichte Dämmstoffe. Außerdem können Filme oder Folien aus einem aromatischen Copolyamid gemäß der Erfindung als wärmebeständige elektrische Isolationsmaterialien eingesetzt werden.

Weitere Eigenschaften und Vorteile der Erfindung werden nachstehend anhand von Beispielen noch näher erläutert. Dabei versteht es sich jedoch, daß die Erfindung nicht auf die Ausführungsbeispiele beschränkt ist. Vielmehr stehen dem Fachmann, ausgehend von den Ausführungsbeispielen, zahlreiche Möglichkeiten für Änderungen und/oder Ergänzungen zu Gebote, ohne daß er dabei den Grundgedanken der Erfindung verlassen müßte.

Beispiel 1

Aromatisches Copolyamid aus 100 Mol-% Terephthalsäuredichlorid, 50 Mol-% p-Phenylendiamin, 25 Mol-% 4,4'-Diaminodiphenylmethan und 25 Mol-% 3,4'-Diaminodiphenylether

21,6 g (0,2 Mol) p-Phenylendiamin, 20,0 g (0,1 Mol) 3,4'-Diaminodiphenylether und 19,8 g (0,1 Mol) 4,4'-Diaminodiphenylmethan werden unter Stickstoff in 2100 g N-Methylpyrrolidon gelöst und zwischen 20°C und 50°C innerhalb von 60 Minuten 91,2 g (0,4 Mol) Terephthalsäuredichlorid zugegeben. Die Lösung wird bei 72°C nachgerührt. Bei Erreichen der gewünschten Viskosität ($\eta_{inh}$ = 3,5 dl/g) wird die Polykondensation abgestoppt durch Zusatz von 1,2 g Acetylchlorid und anschließend mit 24,5 g Calziumoxid neutralisiert. Die Lösung wird filtriert, entgast und naß versponnen. Dazu wird sie aus einer Düse mit 100 Öffnungen von jeweils 0,1 mm Durchmesser in ein Koagulationsbad, bestehend aus einer 80°C warmen Lösung von 35 % N-Methylpyrrolidon in Wasser mit einer Geschwindigkeit von 16,1 m/min ausgesponnen. Die erhaltenen Fäden werden durch zwei Wasserbäder, eine Waschmaschine, über eine Trokkengalette und schließlich über ein Bügeleisen der Temperatur von 460°C auf das 8,1-fache verstreckt.
Der Einzelfilamenttiter beträgt 1,83 dtex bei einer feinheitsbezogenen Festigkeit von 146 cN/tex, eine Dehnung von 4,7 % und einem Anfangsmodul von 30 N/tex, bezogen auf 100 % Dehnung.

Beispiele 2 bis 19

Nach der in Beispiel 1 beschriebenen Arbeitsweise werden weitere aromatische Copolyamide hergestellt, versponnen und geprüft. In der folgenden Tabelle I werden die verwendeten Diamine, deren Mengenverhältnisse, die Lösungsviskositäten der erhaltenen Polymeren, die Verspinnbedingungen und Eigenschaften der erhaltenen Fasern aufgeführt. Als Dicarbonsäurekomponente wird jeweils Terephthalsäuredichlorid eingesetzt. In der Tabelle I werden für die Diamine folgende Abkürzungen verwendet:
PPD= p-Phenylendiamin
DADPE= 3,4'-Diaminodiphenylether
BAPOB= 1,4-Bis-(4-aminophenoxy)-benzol
DABA= 4,4'-Diaminobenzanilid
DADPM= 4,4'-Diaminodiphenylmethan

Tabelle I

| Beispiel-Nr. | 2 | 3 | 4 | 5 | 6 |
|---|---|---|---|---|---|
| PPD (Mol %) | 60 | 50 | 25 | 50 | 25 |
| DADPE (Mol %) | 20 | 25 | 50 | 10 | 25 |
| DABA (Mol %) | - | - | - | - | - |
| BAPOB (Mol %) | 20 | 25 | 25 | 40 | 50 |
| Einzelfilamenttiter (dtex) | 1,65 | 1,84 | 1,93 | 0,70 | 1,71 |
| Reißfestigk. (cN/tex) | 46 | 98 | 39 | 119 | 78 |
| Dehnung (%) | 2,4 | 3,6 | 1,9 | 3,9 | 4,0 |
| A-Modul (N/tex) | 24 | 32 | 25 | 31 | 25 |
| Verstreckverh. 1: | 3,4 | 6,0 | 5,0 | 6,8 | 4,6 |

| Beispiel-Nr. | 7 | 8 | 9 | 10 | 11 | 12 | 13 |
|---|---|---|---|---|---|---|---|
| PPD (Mol %) | 25 | 25 | 30 | 40 | 40 | 50 | 60 |
| DADPE (Mol %) | 50 | 25 | 35 | 30 | 20 | 30 | 20 |
| DADPM (Mol %) | 25 | 50 | 35 | 30 | 40 | 20 | 20 |
| Einzelfilamenttiter (dtex) | 1,84 | 1,53 | 1,55 | 1,91 | 2,07 | 1,68 | 1,96 |
| Reißfestigk. (cN/tex) | 75 | 41 | 39 | 42 | 43 | 72 | 47 |
| Dehnung (%) | 4,3 | 4,9 | 3,3 | 3,4 | 5,8 | 3,5 | 2,7 |
| A-Modul (N/tex) | 24 | 12 | 14 | 17 | 11 | 27 | 21 |
| Verstreckverh. 1: | 5,5 | 5,0 | 7,2 | 5,4 | 4,3 | 5 | 4,0 |

**Tabelle I** (Fortsetzung)

| Beispiel-Nr. | 14 |
|---|---|
| DADPE (Mol %) | 25 |
| DADPM (Mol %) | 25 |
| BAPOB (Mol %) | 50 |
| Einzelfilamenttiter (dtex) | 4,38 |
| Reißfestigk. (cN/tex) | 28 |
| Dehnung (%) | 5,1 |
| A-Modul (N/tex) | 9 |
| Verstreckverh. 1: | 2,2 |

| Beispiel-Nr. | 15 | 16 | 17 | 18 | 19 |
|---|---|---|---|---|---|
| DADPE (Mol %) | 25 | 20 | 25 | 25 | 50 |
| DABA (Mol %) | 50 | 65 | 25 | 50 | 25 |
| DADPM (Mol %) | 25 | 15 | - | - | - |
| BAPOB (Mol %) | - | - | 50 | 25 | 25 |
| Einzelfilamenttiter (dtex) | 131 | 266 | 177 | 151 | 90 |
| Reißfestigk. (cN/tex) | 102 | 37 | 101 | 134 | 117 |
| Dehnung (%) | 3,4 | 1,3 | 4,0 | 3,8 | 3,8 |
| A-Modul (N/tex) | 33 | 33 | 28 | 37 | 36 |
| Verstreckverh. 1: | 5,8 | 11,6 | 6 | 5,6 | 6,5 |

Beispiel 20

Ermittlung der Biegescheuerbeständigkeit eines Fadens aus einem erfindungsgemäßen Copolyamid

Ein Faden aus einem Copolyamid gemäß Beispiel 1 wird unter einer vorgegebenen Belastung einem wiederholten Scheuern gegen einen Standardfaden (= identisch mit Scheuerfaden) ausgesetzt. Als Meßgröße dient die Anzahl der Touren bis zum Bruch des bewegten Fadens. Es werden zwei Experimente unter gleichen Testbedingungen und mit gleichem Material durchgeführt. Man erhält folgende Ergebnisse:

| | 1. Messung | 2. Messung |
|---|---|---|
| Belastung (cN/dtex) | Touren | Touren |
| 0,2 | 22 820 | - 1) |
| 0,4 | 13 976 | 8 482 |
| 0,6 | 4 329 | 3 567 |

1) nicht gemessen

**Patentansprüche**

1. In organischen Polyamid-Lösungsmitteln lösliches aromatisches Copolyamid bestehend im wesentlichen aus mindestens 95 Mol% an wiederkehrenden Struktureinheiten der Formeln Ia, Ib und Ic und gegebenenfalls aus bis zu

5 Mol% an wiederkehrenden Struktureinheiten der Formel Id

$$[\text{-OC-}R^1\text{-CO-NH-}R^2\text{-NH-}] \quad (Ia),$$

$$[\text{-OC-}R^1\text{-CO-NH-}R^3\text{-NH-}] \quad (Ib),$$

$$[\text{-OC-}R^1\text{-CO-NH-}R^4\text{-NH-}] \quad (Ic),$$

$$[\text{-OC-}R^1\text{-CO-NH-}R^5\text{-NH-}] \quad (Id),$$

worin mindestens 95 Mol% aller Reste $R^1$ eine Struktur der Formel IIa und bis zu 5 Mol% aller Reste $R^1$ eine Struktur der Formel IIb aufweisen

$$\text{-}Ar^1\text{-} \quad (IIa),$$

$$\text{-}Ar^2\text{-} \quad (IIb),$$

worin $Ar^1$ ein zweiwertiger aromatischer Rest ist, dessen Valenzbindungen sich in para- oder in vergleichbarer koaxialer oder paralleler Stellung zueinander befinden, und der gegebenenfalls mit ein oder zwei inerten Resten substituiert ist, $Ar^2$ ein zweiwertiger aromatischer Rest ist, dessen Valenzbindungen sich in meta- oder in vergleichbarer gewinkelter Position zueinander befinden, und der gegebenenfalls mit ein oder zwei inerten Resten substituiert ist,
$R^2$ ein Rest der Formel III ist

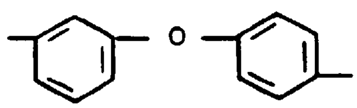

(III),

$R^3$ ein Rest der Formel IV ist

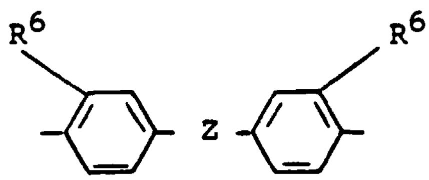

(IV),

worin die Reste $R^6$ unabhängig voneinander Wasserstoff oder inerte Reste bedeuten und Z ausgewählt wird aus der Gruppe bestehend aus -O-, -S-, -CO-, $-SO_2-$, $-C_nH_{2n}-$ und $-O-Ar^1-O-$, wobei n eine ganze Zahl von 1 bis 10 ist und
$Ar^1$ eine der weiter oben definierten Bedeutungen besitzt,
$R^4$ ein von $R^3$ unterschiedlicher Rest ist, der aus einer der für $R^3$ definierten Strukturen ausgewählt wird, und $R^5$ eine der für $Ar^2$ definierten Strukturen aufweist, mit der Maßgabe, daß die Molanteile der Reste $R^2$, $R^3$ und $R^4$, bezogen auf die Summe dieser Reste, innerhalb folgender Grenzen liegen:

Rest $R^2$: 5 bis 70 Mol-%,
Rest $R^3$: 5 bis 70 Mol-%, und
Rest $R^4$: 5 bis 70 Mol-%.

**2.** In organischen Polyamid-Lösungsmitteln lösliches aromatisches Copolyamid bestehend im wesentlichen aus mindestens 95 Mol% aus wiederkehrenden Struktureinheiten der Formeln Ia, Ib und Ie und gegebenenfalls aus bis zu 5 Mol% an wiederkehrenden Struktureinheiten der Formel Id

$$[\text{-OC-}R^1\text{-CO-NH-}R^2\text{-NH-}] \quad (Ia),$$

$$[\text{-OC-}R^1\text{-CO-NH-}R^3\text{-NH-}] \quad (Ib),$$

$$[-OC-R^1-CO-NH-R^7-NH-] \quad (Ie),$$

$$[-OC-R^1-CO-NH-R^5-NH-] \quad (Id),$$

worin $R^1$, $R^2$, $R^3$ und $R^5$ die in Anspruch 1 definierte Bedeutung besitzen und $R^7$ ein unsubstituierter zweiwertiger aromatischer Rest ist, dessen Valenzbindungen sich in para- oder in vergleichbarer koaxialer oder paralleler Stellung zueinander befinden, mit der Maßgabe, daß die Molanteile der Reste $R^2$, $R^3$ und $R^7$, bezogen auf die Summe dieser Reste, innerhalb folgender Grenzen liegen:

Rest $R^2$: 5 bis 70 Mol-%,
Rest $R^3$: 15 bis 70 Mol-%, und
Rest $R^7$: 5 bis 70 Mol-%.

3. Copolyamid gemäß einem der Ansprüche 1 bis 2, dadurch gekennzeichnet, daß $Ar^1$ 1,4-Phenylen ist, $Ar^2$ 1,3-Phenylen bedeutet, $R^7$ ausgewählt wird aus der Gruppe bestehend aus 1,4-Phenylen und dem Rest des 4,4'-Diaminobenzanilids, $R^5$ 1,3-Phenylen ist, und $R^3$ und $R^4$ ausgewählt werden aus der Gruppe bestehend aus den Resten der Formel IV gemäß Anspruch 1, worin Z -O-, $-CH_2-$ oder

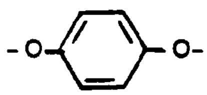

bedeutet und $R^6$ Wasserstoff, Chlor, geradkettiges $C_1$-$C_6$-Alkyl oder geradkettiges $C_1$-$C_6$-Alkoxy ist.

4. Copolyamid gemäß Anspruch 1, dadurch gekennzeichnet, daß $R^3$ ein Rest des 4,4'-Diaminodiphenylmethans ist und $R^4$ einen Rest des 1,4-Bis-(4-aminophenoxy)-benzols darstellt und worin die Molanteile der Reste $R^2$, $R^3$ und $R^4$, bezogen auf die Summe dieser Reste, innerhalb folgender Grenzen liegen:

Rest $R^2$: 20 bis 30 Mol-%,
Rest $R^3$: 20 bis 30 Mol-%, und
Rest $R^4$: 40 bis 60 Mol-%.

5. Copolyamid gemäß Anspruch 2, dadurch gekennzeichnet, daß $R^7$ 1,4-Phenylen ist und $R^3$ ein Rest des 1,4-Bis-(4-aminophenoxy)-benzols oder des 4,4'-Diaminodiphenylmethans ist und worin die Molanteile der Reste $R^2$, $R^3$ und $R^7$, bezogen auf die Summe dieser Reste, innerhalb folgender Grenzen liegen:

Rest $R^2$: 20 bis 30 Mol-%,
Rest $R^3$: 20 bis 30 Mol-%, und
Rest $R^7$: 35 bis 55 Mol-%.

6. Copolyamid gemäß Anspruch 5, dadurch gekennzeichnet, daß $R^3$ ein Rest des 4,4'-Diaminodiphenylmethans ist.

7. Verfahren zur Herstellung des Copolyamids gemäß Anspruch 1, dadurch gekennzeichnet, daß man ein Dicarbonsäuredichlorid der Formel V mit einem Gemisch der Diamine der Formeln VI, VII und VIII und gegebenenfalls IX umsetzt

$$ClOC-R^1-COCl \quad (V)$$

$$H_2N-R^2-NH_2 \quad (VI),$$

$$H_2N-R^3-NH_2 \quad (VII),$$

$$H_2N-R^4-NH_2 \quad (VIII),$$

$$H_2N-R^5-NH_2 \quad (IX),$$

worin die Reste $R^1$ bis $R^5$ die in Anspruch 1 definierte Bedeutung besitzen und worin die Molanteile der Diamine der Formeln VI bis VIII, bezogen auf die Summe der Anteile dieser Diamine, innerhalb solcher Grenzen gewählt werden, daß ein Copolyamid mit den in Anspruch 1 definierten Mengenanteilen von Resten $R^2$, $R^3$ und $R^4$ entsteht.

**8.** Verfahren zur Herstellung des Copolyamids gemäß Anspruch 2, dadurch gekennzeichnet, daß man ein Dicarbonsäuredichlorid der Formel V gemäß Anspruch 7 mit einem Gemisch der Diamine der Formeln VI, VII und X und gegebenenfalls IX umsetzt

$$H_2N\text{-}R^2\text{-}NH_2 \qquad (VI),$$

$$H_2N\text{-}R^3\text{-}NH_2 \qquad (VII),$$

$$H_2N\text{-}R^7\text{-}NH_2 \qquad (X),$$

$$H_2N\text{-}R^5\text{-}NH_2 \qquad (IX),$$

worin $R^2$, $R^3$ und $R^5$ die in Anspruch 1 definierte Bedeutung besitzen und $R^7$ die in Anspruch 2 definierte Bedeutung besitzt und worin die Molanteile der Diamine der Formeln VI, VII und X, bezogen auf die Summe der Anteile dieser Diamine, innerhalb solcher Grenzen gewählt werden, daß ein Copolyamid mit den in Anspruch 2 definierten Mengenanteilen von Resten $R^2$, $R^3$ und $R^7$ entsteht.

**9.** Geformte Artikel, insbesondere Fäden, Fasern, Filamente, Filme und Folien aus aromatischen Copolyamiden gemäß einem der Ansprüche 1 bis 6.

**10.** Verwendung von Fäden oder Fasern aus aromatischen Copolyamiden gemäß einem der Ansprüche 1 bis 6 zur Verstärkung von Kunststoffen, insbesondere zur Verstärkung von Elastomeren.

**Claims**

**1.** An aromatic copolyamide which is soluble in an organic polyamide solvent and consists essentially of at least 95 mol% of recurring structural units of the formulae Ia, Ib and Ic and optionally of up to 5 mol% of recurring structural units of the formula Id

$$[\text{-OC-}R^1\text{-CO-NH-}R^2\text{-NH-}] \qquad (Ia),$$

$$[\text{-OC-}R^1\text{-CO-NH-}R^3\text{-NH-}] \qquad (Ib),$$

$$[\text{-OC-}R^1\text{-CO-NH-}R^4\text{-NH-}] \qquad (Ic),$$

$$[\text{-OC-}R^1\text{-CO-NH-}R^5\text{-NH-}] \qquad (Id),$$

where at least 95 mol% of all radicals $R^1$ have a structure of the formula IIa and up to 5 mol% of all radicals $R^1$ have a structure of the formula IIb

$$\text{-}Ar^1\text{-} \qquad (IIa),$$

$$\text{-}Ar^2\text{-} \qquad (IIb),$$

where $Ar^1$ is a divalent aromatic radical whose valence bonds are in the para or a comparable coaxial or parallel position relative to one another and which is optionally substituted by one or two inert radicals, $Ar^2$ is a divalent aromatic radical whose valence bonds are in the meta or a comparable angled position relative to one another and which is optionally substituted by one or two inert radicals, $R^2$ is a radical of the formula III

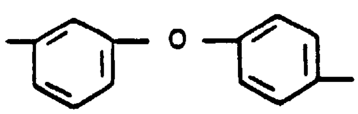

(III),

$R^3$ is a radical of the formula IV

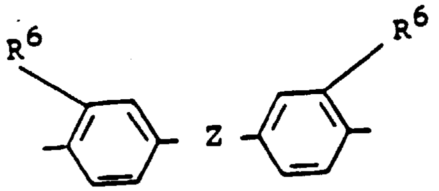

(IV),

where each $R^6$ is independently of the other hydrogen or an inert radical and Z is selected from the group consisting of -O-, -S-, -CO-, $-SO_2-$, $-C_nH_{2n}-$ and $-O-Ar^1-O-$, where n is an integer from 1 to 10 and $Ar^1$ is as defined above, $R^4$ is a radical which differs from $R^3$ which has been selected from one of the structures defined for $R^3$, and $R^5$ has one of the structures defined for $Ar^2$, with the proviso that the mole fractions of the radicals $R^2$, $R^3$ and $R^4$, based on the sum total of these radicals, lie within the following limits:

Radical $R^2$: from 5 to 70 mol%,
Radical $R^3$: from 5 to 70 mol%, and
Radical $R^4$: from 5 to 70 mol%.

**2.** An aromatic copolyamide which is soluble in an organic polyamide solvent and consists essentially of at least 95 mol% of recurring structural units of the formulae Ia, Ib and Ie and optionally of up to 5 mol% of recurring structural units of the formula Id

$$[-OC-R^1-CO-NH-R^2-NH-] \quad (Ia),$$

$$[-OC-R^1-CO-NH-R^3-NH-] \quad (Ib),$$

$$[-OC-R^1-CO-NH-R^7-NH-] \quad (Ie),$$

$$[-OC-R^1-CO-NH-R^5-NH-] \quad (Id),$$

where $R^1$, $R^2$, $R^3$ and $R^5$ are each as defined in claim 1 and $R^7$ is an unsubstituted divalent aromatic radical whose valence bonds are in the para or a comparable coaxial or parallel position relative to one another,
with the proviso that the mole fractions of the radicals $R^2$, $R^3$ and $R^7$, based on the sum total of these radicals, lie within the following limits:

Radical $R^2$: from 5 to 70 mol%,
Radical $R^3$: from 15 to 70 mol%, and
Radical $R^7$: from 5 to 70 mol%.

**3.** A copolyamide as claimed in either of claims 1 and 2, wherein $Ar^1$ is 1,4-phenylene, $Ar^2$ is 1,3-phenylene, $R^7$ is selected from the group consisting of 1,4-phenylene and the radical of 4,4'-diaminobenzanilide, $R^5$ is 1,3-phenylene, and $R^3$ and $R^4$ are each selected from the group consisting of the radicals of the formula IV as indicated in claim 1, where Z is -O-, $-CH_2-$ or

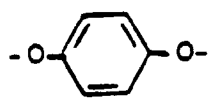

,

and $R^6$ is hydrogen, chlorine, straight-chain $C_1$-$C_6$-alkyl or straight-chain $C_1$-$C_6$-alkoxy.

**4.** A copolyamide as claimed in claim 1, wherein $R^3$ is a radical of 4,4'-diaminodiphenylmethane and $R^4$ is a radical of 1,4-bis(4-aminophenoxy)benzene and the mole fractions of the radicals $R^2$, $R^3$ and $R^4$, based on the sum total of these radicals, lie within the following limits:

Radical $R^2$: from 20 to 30 mol%,
Radical $R^3$: from 20 to 30 mol%, and
Radical $R^4$: from 40 to 60 mol%.

**5.** A copolyamide as claimed in claim 2, wherein $R^7$ is 1,4-phenylene and $R^3$ is a radical of 1,4-bis(4-aminophenoxy) benzene or of 4,4'-diaminodiphenylmethane and the mole fractions of the radicals $R^2$, $R^3$ and $R^7$, based on the

sum total of these radicals, lie within the following limits:

| | |
|---|---|
| Radical $R^2$: | from 20 to 30 mol%, |
| Radical $R^3$: | from 20 to 30 mol%, and |
| Radical $R^7$: | from 35 to 55 mol%. |

**6.** A copolyamide as claimed in claim 5, wherein $R^3$ is a radical of 4,4'-diaminodiphenylmethane.

**7.** A process for preparing the copolyamide as claimed in claim 1, which comprises reacting a dicarbonyl dichloride of formula V with a mixture of the diamines of the formulae VI, VII and VIII and optionally IX

$$ClOC\text{-}R^1\text{-}COCl \quad (V)$$

$$H_2N\text{-}R^2\text{-}NH_2 \quad (VI),$$

$$H_2N\text{-}R^3\text{-}NH_2 \quad (VII),$$

$$H_2N\text{-}R^4\text{-}NH_2 \quad (VIII),$$

$$H_2N\text{-}R^5\text{-}NH_2 \quad (IX),$$

where the radicals $R^1$ to $R^5$ are each as defined in claim 1 and the mole fractions of the diamines of the formulae VI to VIII, based on the sum total of the fractions of these diamines, are selected within limits so as to produce a copolyamide having the proportions of radicals $R^2$, $R^3$ and $R^4$ defined in claim 1,

**8.** A process for preparing the copolyamide as claimed in claim 2, which comprises reacting a dicarbonyl dichloride of the formula V as indicated in claim 7 with a mixture of the diamines of the formulae VI, VII and X and optionally IX

$$H_2N\text{-}R^2\text{-}NH_2 \quad (VI),$$

$$H_2N\text{-}R^3\text{-}NH_2 \quad (VII),$$

$$H_2N\text{-}R^7\text{-}NH_2 \quad (X),$$

$$H_2N\text{-}R^5\text{-}NH_2 \quad (IX),$$

where $R^2$, $R^3$ and $R^5$ are each as defined in claim 1 and $R^7$ is as defined in claim 2 and the mole fractions of the diamines of the formulae VI, VII and X, based on the sum total of the fractions of these diamines, are selected within limits so as to produce a copolyamide having the proportions of radicals $R^2$, $R^3$ and $R^7$ defined in claim 2.

**9.** A formed article, in particular a filament, fiber, yarn, film or sheet, made of an aromatic copolyamide as claimed in any one of claims 1 to 6.

**10.** The use of filaments or fibers made of an aromatic copolyamide as claimed in any one of claims 1 to 6 for reinforcing plastics, in particular for reinforcing elastomers.

**Revendications**

**1.** Copolyamide aromatique soluble dans des solvants organiques de type polyamides, composé essentiellement d'au moins 95% en mole de motifs de structure répétitifs de formules Ia, Ib et Ic et éventuellement jusqu'à 5% en mole de motifs de structure répétitifs de formule Id

$$[\text{-}OC\text{-}R^1\text{-}CO\text{-}NH\text{-}R^2\text{-}NH\text{-}] \quad (Ia),$$

$$[\text{-}OC\text{-}R^1\text{-}CO\text{-}NH\text{-}R^3\text{-}NH\text{-}] \quad (Ib),$$

$$[\text{-}OC\text{-}R^1\text{-}CO\text{-}NH\text{-}R^4\text{-}NH\text{-}] \quad (Ic),$$

$$[-OC-R^1-CO-NH-R^5-NH-] \quad (Id),$$

dans lequelles au moins 95% en mole de tous les radicaux $R^1$ présentent une structure de formule IIa et jusqu'à 5% en mole de tous les radicaux $R^1$ une structure de formule IIb

$$-Ar^1- \quad (IIa),$$

$$-Ar^{2-} \quad (IIb),$$

dans lesquelles $Ar^1$ étant un radical aromatique bivalent dont les liaisons de valence sont en position para ou en position relative coaxiale ou parallèle, l'une par rapport à l'autre, et lequel radical aromatique est éventuellement substitué par un ou deux radicaux inertes, $Ar^2$ est un radical aromatique bivalent dont les liaisons de valence se trouvent en position méta ou en position angulaire relative les unes par rapport aux autres, et qui est éventuellement substitué par un ou deux radicaux inertes,

$R^2$ représente un radical de formule III

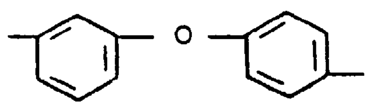

(III)

$R^3$ un radical de formule IV

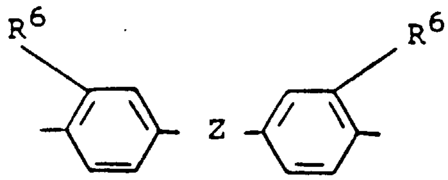

(IV)

où les radicaux $R^6$ indépendamment les uns des autres représentent l'hydrogène ou des radicaux inertes et Z est pris dans le groupe comportant -O-, -S-, -CO-, $-SO_2-$, $-C_nH_{2n}-$ et $-O-Ar^1-O-$, n étant un nombre entier de 1 à 10 et $Ar^1$ ayant la signification donnée ci-dessus,

$R^4$ représente un radical différent de $R^3$ qui est pris parmi les structures définies pour $R^3$, et

$R^5$ représente l'une des structures définies pour $Ar^2$, à la condition que les taux molaires de radicaux $R^2$, $R^3$ et $R^4$, par rapport à la somme de ces radicaux se trouvent dans les limites suivantes :

Radical $R^2$: de 5 à 70% mole
Radical $R^3$: de 5 à 70% mole et
Radical $R^4$: de 5 à 70% mole.

**2.** Copolyamide aromatique soluble dans des solvants organiques de type polyamides, composé essentiellement d'au moins 95% en mole de motifs de structure répétitifs de formules Ia, Ib et Ie et éventuellement jusqu'à 5% en mole de motifs de structure répétitifs de formule Id

$$[-OC-R^1-CO-NH-R^2-NH-] \quad (Ia),$$

$$[-OC-R^1-CO-NH-R^3-NH-] \quad (Ib),$$

$$[-OC-R^1-CO-NH-R^7-NH-] \quad (Ie),$$

$$[-OC-R^1-CO-NH-R^5-NH-] \quad (Id),$$

dans lesquelles $R^1$, $R^2$, $R^3$ et $R^5$ ont la signification définie dans la revendication 1, et $R^7$ représente un radical aromatique bivalent non substitué, dont les liaisons de valence se trouvent en position para ou en position relative coaxiale ou parallèle les unes par rapport aux autres, à la condition que les taux molaires des radicaux $R^2$, $R^3$ et $R^7$, par rapport à la somme de ces radicaux se trouvent dans les limites suivantes :

Radical $R^2$: de 5 à 70% en mole
Radical $R^3$: de 15 à 70% mole et

Radical $R^4$: de 5 à 70% mole.

3. Copolyamide selon la revendication 1 ou 2, caractérisé en ce que $Ar^1$ est 1,4-phénylène, $Ar^2$ est 1,3-phénylène, $R^7$ est choisi dans le groupe comportant 1,4-phénylène et le radical 4,4'-diaminobenzanilide, $R^5$ est 1,3-phénylène et $R^3$ et $R^4$ sont pris dans le groupe comportant des radicaux de formule IV selon la revendication 1, où Z représente -O-, $-CH_2-$

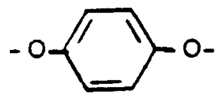

et $R^6$ représente l'hydrogène, le chlore, alkyle en $C_1$-$C_6$ linéaire ou alcoxy en $C_1$-$C_6$ linéaire.

4. Copolyamide selon la revendication 1, caractérisé en ce que $R^3$ représente un radical 4,4'-diaminodiphénylméthane et $R^4$ un radical du 1,4-bis-(4-aminophényoxy)benzène et où les taux molaires en radicaux $R^2$, $R^3$ et $R^4$, par rapport à la somme de ces radicaux, se trouvent dans les limites suivantes :

Radical $R^2$: de 20 à 30 mol%
Radical $R^3$: de 20 à 30 mol% et
Radical $R^4$: de 40 à 60 mol%.

5. Copolyamide selon la revendication 2, caractérisé en ce que $R^7$ est 1,4-phénylène, $R^3$ représente un radical de 1,4-bis-(4-aminophényoxybenzène) ou de 4,4'-diaminodiphénylméthe où les taux molaires en radicaux $R^2$, $R^3$ et $R^7$, par rapport à la somme de ces radicaux se trouvent dans les limites suivantes :

Radical $R^2$: de 20 à 30% en mole
Radical $R^3$: de 20 à 30% en mole et
Radical $R^4$: de 35 à 55% en mole.

6. Copolyamide selon la revendication 5, caractérisé en ce que $R^3$ est un radical 4,4'-diamino-diphénylméthane.

7. Procédé pour la préparation du copolyamide selon la revendication 1, caractérisé en ce qu'on fait réagir un dichlorure d'acide dicarboxylique de formule V avec un mélange des diamines de formules VI, VII et VIII et éventuellement IX

$$ClOC\text{-}R^1\text{-}COCl \qquad (V),$$

$$H_2N\text{-}R^2\text{-}NH_2 \qquad (VI),$$

$$H_2N\text{-}R^3\text{-}NH_2 \qquad (VII),$$

$$H_2N\text{-}R^4\text{-}NH_2 \qquad (VIII),$$

$$H_2N\text{-}R^5\text{-}NH_2 \qquad (IX),$$

dans lesquelles les radicaux $R^1$ à $R^5$ ont les significations définies dans la revendication 1, et les taux molaires en diamines de formules VI à VIII par rapport à la somme des taux de ces diamines, doivent être choisis à dans des limites telles qu'il se forme un copolyamide ayant des taux quantitatifs en radicaux $R^2$, $R^3$ et $R^4$ définis dans la revendication 1.

8. Procédé pour la préparation du copolyamide selon la revendication 2, caractérisé en ce qu'on fait réagir un dichlorure d'acide dicarboxylique de formule V selon la revendication 7, avec un mélange des diamines de formules VII, VIII et X et éventuellement IX

$$H_2N\text{-}R^2\text{-}NH_2 \qquad (VI),$$

$$H_2N\text{-}R^3\text{-}NH_2 \qquad (VII),$$

$$H_2N\text{-}R^7\text{-}NH_2 \qquad (X),$$

$$H_2N\text{-}R^5\text{-}NH_2 \qquad (IX),$$

dans lesquelles $R^2$, $R^3$ et $R^5$ ont les significations données dans la revendication 1, et $R^7$ a les significations données dans la revendication 2, et dans lesquels les taux molaires en diamines de formules VI, VII et X, par rapport à la somme des taux de ces diamines, doivent être choisis dans des limites telles qu'il se forme un copolyamide ayant des taux quantitatifs rn radicaux $R^2$, $R^3$ et $R^7$ définis dans la revendication 2.

**9.** Articles façonnés, plus particulièrement fils, fibres, filaments, pellicules et feuilles de copolyamides aromatiques selon l'une des revendications 1 à 6.

**10.** Utilisation des fils ou fibres de copolyamides aromatiques selon l'une des revendications 1 à 6, pour le renforcement des matières plastiques, plus particulièrement pour le renforcement des élastomères.